# EUROPÄISCHE PATENTSCHRIFT

(11) **EP 2 543 461 B1**
(45) Veröffentlichungstag und Bekanntmachung des Hinweises auf die Patenterteilung: **25.03.2015**
(21) Anmeldenummer: 11005890.6
(22) Anmeldetag: 19.07.2011
(51) Int. Cl.: B23K 10/02, F16L 23/026, H02G 5/06, B23K 37/06, B23K 33/00

(54) **Schweissverfahren zum Verbinden eines Aluminium-Rohrflansches mit einem Rohr aus Aluminium, indem ein Plasmabrenner nur einmal um das Rohr bzw. den Rohrflansch herum geführt wird**
Method of welding an aluminium flange to an aluminium tube, in which a plasma torch turns only once around the tube or the flange
Méthode de soudage d'une bride en aluminium sur un tube en aluminium, dans laquelle une torche plasma est tournée une seule fois autour du tube ou de la bride

(30) Priorität: 05.07.2011 CH 11202011
(43) Veröffentlichungstag der Anmeldung: 09.01.2013
(73) Patentinhaber: Wartmann Technologie AG, 4538 Oberbipp (CH)
(72) Erfinder: Holenweg, Beat, 4522 Rüttenen (CH)
(74) Vertreter: Luchs, Willi

(56) Entgegenhaltungen:
- JP-A- 9 164 487
- JP-A- 9 239 546
- JP-A- 60 015 069
- DATABASE WPI Week 197840 Thomson Scientific, London, GB; AN 1978-71470A XP002663253, -& JP 53 099049 A (HITACHI LTD) 30. August 1978 (1978-08-30)

## Beschreibung

Die Erfindung betrifft ein Schweissverfahren zum Verbinden eines Aluminium-Rohrflansches mit einem Rohr aus Aluminium, gemäss dem Oberbegriff des Anspruches 1 (siehe, z.B., JP 53/099049 A).

Es ist bekannt, Rohre aus Aluminium-Knetlegierung (gepresst oder spiralgeschweisst) mit einem Rohrflansch zu versehen, wobei die Verbindung mit Hilfe eines Plasmabrenners im MIG (Plasma Metall-Inert-Gas) Schweissverfahren erfolgt. Dabei werden das Rohr und der Rohrflansch zueinander fixiert und in dieser gegenseitigen Ausrichtung eine Schweissnaht rund um das Rohr bzw. den Rohrflansch herum in mehreren Schweisslagen geführt. In der Regel wird am Rohr beidseitig je ein Rohrflansch angeschweisst; auf diese Art und Weise erfolgt beispielsweise die Herstellung von gasisolierten Schaltergehäusen (GIS) oder von gasisolierten Leitergehäusen (GIL). Bei diesem bekannten Schweissverfahren entstehen im Rohr Spannungen und Verformungen wegen dem nacheinander folgenden Erhitzen und Abkühlen der Schweissnaht und der damit verbundenen unregelmässigen Schrumpfung, was einen aufwendigen Richtvorgang unumgänglich macht, um bestimmte Toleranzen bezüglich der Länge, Parallelität und Ebenheit beider Flanschflächen bei beidseitigen Rohrflanschen sowie ihr gegenseitiges Verdrehen etc. einzuhalten. Es besteht auch die Gefahr von Luft- bzw. Gaseinschlüssen zwischen den einzelnen Schweisslagen. Der gesamte Schweissprozess ist zudem kompliziert und aufwendig.

Der vorliegenden Erfindung wurde die Aufgabe zugrundegelegt, ein Schweissverfahren der eingangs genannten Art vorzuschlagen, das einfach und kostengünstig ist und dennoch eine verbesserte Schweissqualität gewährleistet, wobei auch die Notwendigkeit einer Nachbehandlung wie z.B. Flammrichten minimiert wird.

Die Aufgabe wird erfindungsgemäss durch ein Schweissverfahren mit den Merkmalen des Anspruches 1 gelöst.

Bevorzugte Weitergestaltungen des erfindungsgemässen Schweissverfahren bilden den Gegenstand der abhängigen Ansprüche.

Dadurch, dass die Schweissnaht in lediglich einer Schweisslage erzeugt wird, wird die Gefahr von Luft- bzw. Gaseinschlüssen praktisch eliminiert.

Die Toleranzen bezüglich der Länge, Winkligkeit des Flansches oder der Flansche zur Rohrachse, Parallelität der beiden Flanschflächen, Ebenheit der Flanschflächen oder Umfangverdrehung vom Flansch zu Flansch können besser eingehalten werden, so dass die Notwendigkeit von Flammrichten minimiert wird. Durch den eingesetzten Plasma-Lichtbogen mit + Polung am Brenner ist ein Entfernen der Oxidschicht im Schweissnahtbereich nicht notwendig.

Zum Schweissen kann in einer besonders bevorzugten Weise ein Plasmabrenner verwendet werden, bei dem zur Erhöhung der Schweissgeschwindigkeit neben den Kanälen für das Plasmagas und den Kanälen für das Schutzgas auch zusätzliche Kühlkanäle eines geschlossenen Kühlsystems bis zum unteren Bereich des Brenners führen und diesen von der Überhitzung durch den Plasma-MIG-Lichtbogen schützen.

Die Erfindung wird nachfolgend anhand der Zeichnung näher erläutert. Es zeigen:
- Fig. 1: schematisch einen Rohrflansch und einen Teil eines diesem gegenüber positionierten Rohres in Seitenansicht;
- Fig. 2: ein erstes Ausführungsßeispiel einer Schweissfuge zwischen dem Rohrflansch und dem Rohr im Querschnitt;
- Fig. 3: ein zweites Ausführungsbeispiel einer Schweissfuge zwischen dem Rohrflansch und dem Rohr im Querschnitt; und
- Fig. 4: ein Ausführungsbeispiel eines Plasmabrenners zum Verschweissen des Rohrflansches mit dem Rohr.

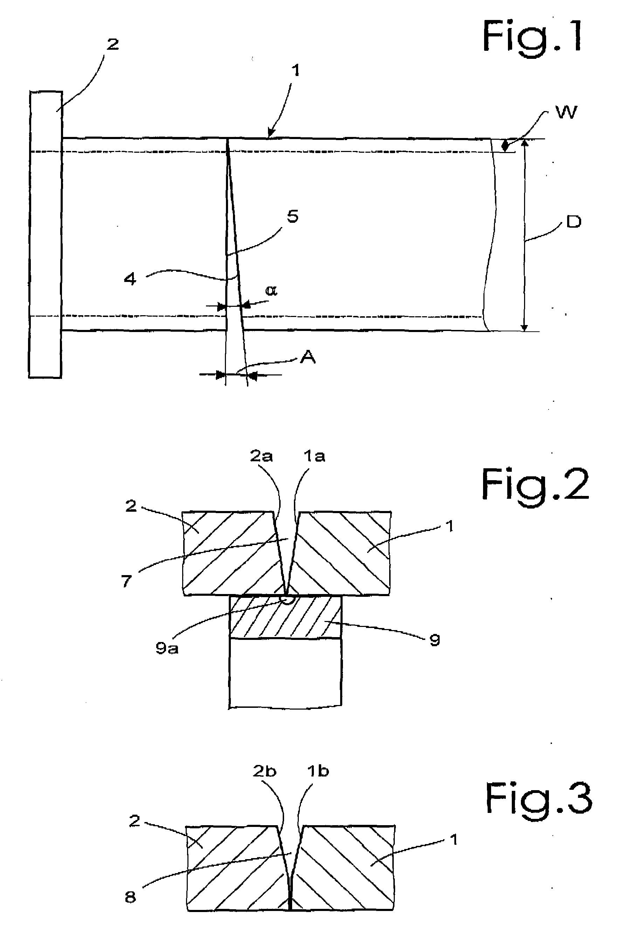

Fig.1 zeigt ein Rohr 1 aus Aluminium-Knetlegierung, mit einem Durchmesser D und einer Rohrwand-Dicke W, wobei es sich bekanntlich um ein gepresstes oder um ein spiralgeschweisstes Rohr handeln kann. Das Rohr 1 soll an einem Ende mit einem Rohrflansch 2 verschweisst werden, bei dem es sich insbesondere um einen Aluminiumgussteil handelt. In der Regel wird auch auf dem anderen Ende des Rohres 1 ein zweiter Rohrflansch angeschweisst, der jedoch aus der Zeichnung nicht ersichtlich ist.

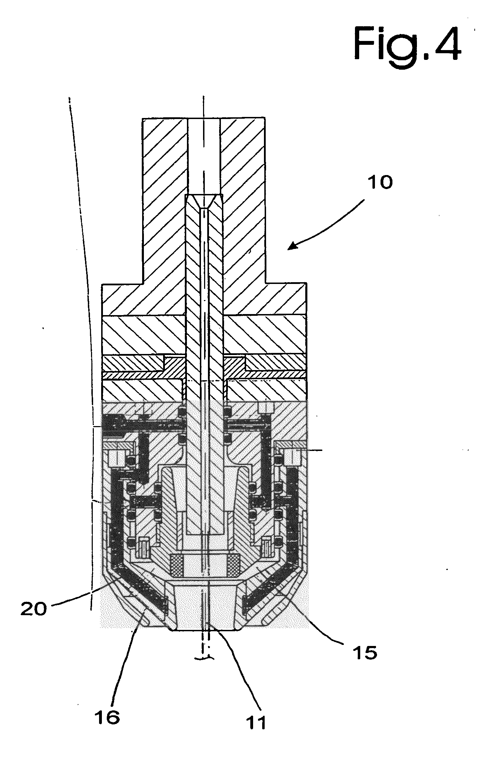

Das Rohr 1 und der Rohrflansch 2 werden für das Verschweissen in einer nicht näher dargestellten Aufspannvorrichtung relativ zueinander fixiert und in dieser gegenseitigen Ausrichtung mit Hilfe eines Plasmabrenners im MIG (Plasma Metall-Inert-Gas) Schweissverfahren miteinander verschweisst. Das MIG-Plasmaschweissen ist an sich bekannt und wird daher im Detail nicht näher beschrieben. Fig. 4 zeigt eine für das erfindungsgemässe Schweissverfahren entwickelte Ausführungsform eines Plasmabrenners 10, wobei weiter unten lediglich die von herkömmlichen Plasmabrennern abweichende Merkmale erwähnt werden.

Zuvor wird das Rohr 1 auf einer Orbitsäge auf Solllänge, vergrössert um einen Schweissschrumpfzusatz, geschnitten. Erfindungsgemäss wird dass Rohr 1 schräg geschnitten, so dass bei einem zum Rohrflansch 2 koaxial fixierten Rohr 1 seine Stirnfläche 4 einen Winkel α mit der Stirnfläche 5 des Rohrflansches 2 einschliesst (vgl. Fig. 1). Der Winkel α beträgt vorzugsweise 0,1 bis 0,3 mm. Dies bedeutet, dass wenn ein Rohr 1 mit einem Durchmesser D von 500 mm mit einem Punkt am Rohrflansch 2 anliegt, der diametral gegenüberliegende, maximale Spalt A zwischen den beiden Stirnflächen 4, 5 beispielsweise 1 mm beträgt.

Für die Schweissung werden die beiden Schweissteile im Schweissnahtbereich entgratet und von Verunreinigungen gesäubert (z.B. mit Aceton). Bis zur Rohrwand-Dicke W von 6 mm werden in der Regel die Stirnkanten nicht abgeschrägt, hingegen bei grösseren Rohrwand-Dicken W werden am Rohr 1 bzw. am Rohrflansch 2 schräge Schweisskanten 1 a, 2a (Fig. 2) bzw. 1b, 2b (Fig. 3) angefertigt, so dass eine im Querschnitt Y-, halb Y- oder V-förmige Schweissfuge gebildet werden kann (Fig. 2 zeigt eine V-förmige Schweissfuge 7, Fig. 3 eine Y-förmige Schweissfuge 8).

Erfindungsgemäss wird bis zur Rohrwand-Dicke W bis zu 11 mm die Schweissnaht in lediglich einer Schweisslage erzeugt, indem der Plasmabrenner 10 nach Fig. 4 mit einer abschmelzenden Elektrode 11 mit einem vorbestimmten Vorschub nur einmal um das Rohr 1 bzw. den Rohrflansch 2 herum geführt wird. Dabei beginnt das Rundschweissen mit Vorteil an der Stelle des gegenüber dem Rohrflansch 2 fixierten Rohres 1, die am nächsten zum Rohrflansch 2 liegt oder den Rohrflansch 2 berührt, und die vom Schweissbeginn eine grössere Wärmeeinbringung erfährt. Der schräge Rohrschnitt dient zur Kompensation der unregelmässigen Schrumpfung beim Schweissprozess.

Wie in Fig. 2 angedeutet, wird zur Formung der Nahtwurzel eine Schweissbadsicherung 9 eingesetzt, die das Wurzelvolumen auf Mindestmass hält. Schweissbadsicherungen sind an sich bekannt. Die beispielsweise drei radial verstellbare und mit einer Umfangsnut 9a versehenen Backen umfassende Schweissbadsicherung 9 wird daher in ihrer Wirkungsweise nicht näher beschrieben. Sie wird mit Vorteil im Backenfutter der bereits erwähnten Aufspannvorrichtung integriert.

Die Schweissung erfolgt mit optimierten Parametern zur Gasmenge, Stromstärke, Schweissdrahtvorschub etc. Die Schweissgeschwindigkeit ist abhängig von der Rohrwand-Dicke W sowie von der Schweissfugen-Querschnittsform und letztlich von den aufeinander bestimmten Schweissparametern. Die Erhöhung der Schweissgeschwindigkeit macht auch die Ausführung des Plasmabrenners nach Fig. 4 möglich. Neben den Kanälen 15 für das Plasmagas und den Kanälen 16 für das Schutzgas führen auch zusätzliche Kühlkanäle 20 eines geschlossenen Kühlsystems bis zum unteren Bereich des Brenners 10 und schützen diesen von der Überhitzung durch den Plasma-MIG-Lichtbogen.

Mit Vorteil erfolgt das Rundschweissen in aufeinander folgenden Teilabschnitten, in denen einzelne Schweissparameter wie Stromstärke, Drahtvorschub, Schweissgeschwindigkeit, Menge und Gemisch der Schweissgase etc. automatisch gesteuert werden.

Soll an beiden Enden des Rohres je ein Flansch angeschweisst werden, so wird das Rohr zwischen die Flansche gelegt und mit einer axialen Spannvorrichtung fixiert, wobei eine radiale Positionierung des Rohres mit einer pneumatisch gesteuerten Anpassung der Schweissbadsicherung erfolgt und die Flansche in entgegengesetzter Richtung zum erwarteten Schweissverzug (Schrumpfspannung) gezielt vorgespannt werden.

Dadurch, dass die Schweissnaht in lediglich einer Schweisslage erzeugt wird, wird die Gefahr von Luft- bzw. Gaseinschlüssen praktisch eliminiert. Die Toleranzen bezüglich der Länge, Winkligkeit des Flansches oder der Flansche zur Rohrachse, Parallelität der beiden Flanschflächen, Ebenheit der Flanschflächen oder Umfangverdrehung vom Flansch zu Flansch können besser eingehalten werden, so dass die Notwendigkeit von Flammrichten minimiert wird. Durch den eingesetzten Plasma-Lichtbogen mit + Polung am Brenner ist ein Entfernen der Oxidschicht im Schweissnahtbereich nicht notwendig.

## Patentansprüche

1. Schweissverfahren zum Verbinden eines Aluminium-Rohrflansches (2) mit einem Rohr (1) aus Aluminium, bei dem das Rohr (1) und der Rohrflansch (2) zueinander fixiert und in dieser gegenseitigen Ausrichtung eine Schweissnaht rund um das Rohr (1) bzw. den Rohrflansch (2) herum mittels eines Plasmabrenners (10) im MIG (Plasma Metall-Inert-Gas) Schweissverfahren erzeugt wird, wobei zur Formung der Nahtwurzel eine Schweissbadsicherung (9) eingesetzt wird, **dadurch gekennzeichnet, dass**
bei einer in ihrer Querschnittsform von der Rohrwand-Dicke (W) abhängigen Schweissfuge (7; 8) zwischen dem Rohr (1) und dem Rohrflansch (2) die Schweissnaht in lediglich einer Schweisslage erzeugt wird, indem der Plasmabrenner (10) mit einer abschmelzenden Elektrode (11) mit einem vorbestimmten Vorschub nur einmal um das Rohr (1) bzw. den Rohrflansch (2) herum geführt wird, wobei die Rohrwand-Dicke (W) bis zu 11 mm betragen kann, und das zum Verschweissen mit dem Rohrflansch (2) vorgesehene Rohr (1) auf Solllänge, vergrössert um einen Schweissschrumpfzusatz, schräg geschnitten wird, so dass bei einem zum Rohrflansch (2) koaxial fixierten Rohr (1) seine Stirnfläche (4) einen Winkel (α) mit der Stirnfläche (5) des Rohrflansches (2) einschliesst, wobei das Rundschweissen an der Stelle des gegenüber dem Rohrflansch (2) fixierten Rohres (1) beginnt, die am nächsten zum Rohrflansch (2) liegt oder den Rohrflansch (2) berührt.

2. Schweissverfahren nach Anspruch 1, **dadurch gekennzeichnet, dass** der Rohrflansch (2) aus einem Aluminiumguss und das Rohr (1) aus einer Aluminium-Knetlegierung hergestellt ist.

3. Schweissverfahren nach Anspruch 1 oder 2, **dadurch gekennzeichnet**, **dass** der Winkel (α) in etwa 0,1 bis 0,3° beträgt.

4. Schweissverfahren nach einem der Ansprüche 1 bis 3, dadurch **gekennzeichnet, dass** das Rohr (1) und der Rohrflansch (2) vor dem gegenseitigen Fixieren bzw. vor Befestigung in einer Aufspannvorrichtung an der Schweissstelle entgratet und von Verunreinigungen gesäubert werden, wobei bei Rohrwand-Dicke (W) ab ca. 6 mm schräge Schweisskanten (1a, 2a; 1b, 2b) am Rohr bzw. am Rohrflansch vorgesehen sind, so dass eine im Querschnitt Y-, halb Y- oder V-förmige Schweissfuge (7; 8) gebildet werden kann.

5. Schweissverfahren nach einem der Ansprüche 1 bis 4, dadurch **gekennzeichnet, dass** zur Erhöhung der Schweissgeschwindigkeit der Plasmabrenner (10) mit einem Kühlkreis ausgerüstet ist, dessen zusätzliche Kühlkanäle (20) bis zum unteren Bereich des Brenners (10) bzw. bis in den Bereich des Plasma-MIG-Lichtbogens führen und den Brenner (10) vor Überhitzung schützen.

6. Schweissverfahren nach einem der Ansprüche 1 bis 5, dadurch **gekennzeichnet, dass** das Rundschweissen in aufeinander folgenden Teilabschnitten erfolgt, in denen einzelne Schweissparameter wie Stromstärke, Drahtvorschub, Schweissgeschwindigkeit, Menge und Gemisch der Schweissgase etc. automatisch gesteuert werden.

7. Schweissverfahren nach einem der Ansprüche 1 bis 6, dadurch **gekennzeichnet, dass** an beiden Enden des Rohres (1) je ein Rohrflansch (2) angeschweisst wird, wozu das Rohr (1) zwischen die Rohrflansche gelegt und mit einer axialen Spannvorrichtung fixiert wird, eine radiale Positionierung des Rohres (1) mit einer pneumatisch gesteuerten Anpassung der Schweissbadsicherung erfolgt und die Rohrflansche in entgegengesetzter Richtung zum erwarteten Schweissverzug (Schrumpfspannung) gezielt vorgespannt werden.

## Claims

1. Welding method for joining a tube flange (2) of aluminum with a tube (1) made of aluminum, with which the tube (1) and the tube flange (2) will be fixed one to each other and at this mutual alignment it will be generated a weld seam around the pipe (1) respective around the tube flange (2) by means of a plasma torch (10) of a MIG (metal-inert-gas plasma) welding method, whereby a weld pool backup (9) is used to form the seam root, **characterized in that** the weld seam between the tube (1) and the tube flange (2) is produced in only one welding layer with a welding joint (7; 8) depending in its cross-sectional shape on the tube wall thickness (W), with which the plasma torch (10) with a melting electrode (11) with a predetermined feed is conducted only once around the pipe (1) respective the tube flange (2), whereby the tube wall thickness (W) amounts till 11 mm, and that for the welding with the tube flange (2) provided tube (1) will be cut slope to target length enlarged by a welding shrink addition, so that with a tube (1) coaxially fixed to the tube flange (2) its abutting face (4) includes an angle (α) to the abutting face (5) of the tube flange (2), whereby the circular welding begins at the position of the tube (1) fixed against the tube flange (2), which is closest to the tube flange (2) or touches the tube flange (2).

2. Welding method according to claim 1, **characterized in that** the tube flange (2) is made of a cast aluminum and the tube (1) is made of a wrought aluminum alloy.

3. Welding method according to claim 1 or 2, **characterized in that** the angle (α) amounts approximately 0.1 to 0.3

4. Welding method according to any one of the claims 1 to 3, **characterized in that** the tube (1) and the tube flange (2) will be deburred and cleaned of impurities before the mutual fixation respectively before mounting in a clamping device at the welding location, whereby oblique welding edges (1 a, 2a; 1b, 2b) are provided on the pipe or on the pipe flange in the tube wall-thickness (W) more than about 6 mm, so that a welding joint (7; 8) can be formed, which is in the cross-section Y-, semi Y- or V-shaped.

5. Welding method according to any one of the claims 1 to 4, **characterized in that** the plasma torch (10) is equipped with a cooling circuit to increase the welding speed, whose additional cooling channels (20) are conducted till the bottom region of the burner (10) respectively into the region of the plasma-MIGflashing-arc and protect the burner (10) against overheating.

6. Welding method according to any one of the claims 1 to 5, **characterized in that** the circular welding is carried out in successive sections, in which individual welding parameters are automatically controlled, such as current rating, wire feed, welding speed, volume and mixture of welding gases etc..

7. Welding method according to any one of the claims 1 to 6, **characterized in that** a respective pipe flange (2) will be welded at both ends of the pipe (1), whereto the pipe (1) will be placed between the pipe flanges and fixed with an axial clamping device, a radial positioning of the tube (1) is used with a pneumatically-controlled adjustment of the weld pool backup and the pipe flanges will be targeted preclamped in the opposite direction to the expected welding distortion (shrinkage stress).

## Revendications

1. Procédé de soudage pour relier une bride (2) de tuyau en aluminium à un tuyau (1) en aluminium, dans lequel le tuyau (1) et la bride (2) de tuyau sont immobilisés l'un par rapport à l'autre et, en cette orientation mutuelle, un cordon de soudure est produit autour du tuyau (1) et de la bride (2) de tuyau, à l'aide d'un chalumeau (10) à plasma, suivant un procédé de soudage MIG (plasma, métal, gaz inerte), dans lequel, pour former la racine du cordon, on utilise une sécurité (9) à bain de soudure, **caractérisé en ce que**,
pour une rainure (7 ; 8) de soudage entre le tuyau (1) et la bride (2) de tuyau, rainure dont la forme de la section transversale dépend de l'épaisseur (W) de la paroi du tuyau, le cordon de soudure est produit simplement en une couche de soudure, en faisant passer le chalumeau (10) à plasma ayant une électrode (11) fusible, à une avance déterminée à l'avance, seulement une fois autour du tuyau (1) et de la bride (2) de tuyau, l'épaisseur (W) de la paroi du tuyau pouvant aller jusqu'à 11 mm, et le tuyau (1) prévu pour le soudage à la bride (2) de tuyau étant coupé de manière inclinée à une longueur de consigne, agrandie d'une addition de retrait au soudage, de manière à ce que, pour un tuyau (1) immobilisé co-axialement à la bride (2) de tuyau, sa surface (4) frontale fasse un angle (α) avec la surface (5) frontale de la bride (2) du tuyau, la soudure circonférentielle commençant à l'endroit du tuyau (1) immobilisé par rapport à la bride (2) de tuyau, qui se trouve le plus près de la bride (2) de tuyau ou qui touche la bride (2) de tuyau.

2. Procédé de soudage suivant la revendication 1, **caractérisé en ce que** la bride (2) de tuyau est en aluminium et le tuyau (1) est en alliage corroyé d'aluminium.

3. Procédé de soudage suivant la revendication 1 ou 2, **caractérisé en ce que** l'angle (α) est compris entre environ 0,1 et 0,3°.

4. Procédé de soudage suivant l'une des revendications 1 à 3, **caractérisé en ce que** le tuyau (1) et la bride (2) de tuyau sont, avant l'immobilisation mutuelle ou la fixation dans un dispositif de serrage, ébarbés au point de soudure et nettoyés d'impuretés, des bords (la, 2a ; 1b, 2b) inclinés du tuyau ou de la bride de tuyau étant prévus pour une épaisseur (W) de la paroi du tuyau à partir d'environ 6 mm, de manière à pouvoir former une rainure (7 ; 8) de soudage de section transversale en forme de Y, en forme de demi Y ou en forme de V.

5. Procédé de soudage suivant l'une des revendications 1 à 4, **caractérisé en ce que**, pour augmenter la vitesse de soudage, le chalumeau (10) à plasma est équipé d'un circuit de refroidissement, dont les canaux (20) de refroidissement supplémentaires vont jusqu'à la partie inférieure du chalumeau (10) ou jusque dans la partie du four à arc électrique à plasma-MIG et protègent le chalumeau (10) de la surchauffe.

6. Procédé de soudage suivant l'une des revendications 1 à 5, **caractérisé en ce que** le soudage circonférentiel s'effectue dans des segments partiels successifs, dans lesquels des paramètres de soudage individuels, comme l'intensité du courant, l'avance du fil, la vitesse de soudage, la quantité et le mélange des gaz de soudure, etc. sont commandés automatiquement.

7. Procédé de soudage suivant l'une des revendications 1 à 6, **caractérisé en ce que** l'on soude aux deux extrémités du tuyau (1) respectivement une bride (2) de tuyau, le tuyau (1) étant à cet effet mis entre les brides de tuyau et immobilisé par un dispositif de serrage axial, une mise en position radiale du tuyau (1) s'effectuant par une adaptation commandée pneumatiquement de la sécurité à bain de soudure et les brides de tuyau étant précontraintes, à dessein, dans un sens opposé, à l'étirage de soudure (tension de retrait) auquel on s'attend.
